# FASCICULE DE BREVET EUROPEEN

(11) **EP 2 165 485 B1**
(45) Date de publication et mention de la délivrance du brevet: **15.04.2015**
(21) Numéro de dépôt: 08805989.4
(22) Date de dépôt: 12.06.2008
(51) Int. Cl.: H04W 40/00

(54) **GESTION DE PAQUETS DE COUCHE RESEAU DANS UN RESEAU D'ACCES D'UN RESEAU DE TELECOMMUNICATIONS**
VERWALTUNG VON PAKETEN DER SICHERUNGSSCHICHT IN EINEM ZUGANGSNETZ EINES TELEKOMMUNIKATIONSNETZES
MANAGEMENT OF NETWORK LAYER PACKETS IN AN ACCESS NETWORK OF A TELECOMMUNICATIONS NETWORK

(30) Priorité: 18.06.2007 FR 0755829
(43) Date de publication de la demande: 24.03.2010
(73) Titulaire: Orange, 75015 Paris (FR)
(72) Inventeur: PONS, Jérôme, F-75011 Paris (FR); HERBELIN, Philippe, F-94100 Vincennes (FR)
(74) Mandataire: Regimbeau
(86) Numéro de dépôt international: PCT/FR2008/051054
(87) Numéro de publication internationale: WO 2009/004223

(56) Documents cités:
- WO-A-2004/003690
- WO-A-2006/118489
- US-A1- 2006 221 933

## Description

La présente invention concerne une gestion de paquets de couche réseau dans un réseau d'accès d'un réseau de télécommunications afin de rediriger un paquet de couche réseau vers un premier réseau de transmission ou vers un deuxième réseau de transmission local.

L'invention s'inscrit dans le domaine des télécommunications et plus particulièrement dans les réseaux radio cellulaires pour des mobiles, dans le cas où le réseau d'accès a accès à deux réseaux de transmission tels qu'un réseau coeur pour mobiles par exemple de type réseau de télécommunications UMTS ("Universal Mobile Télécommunications System" en anglais), dit réseau de transmission classique, et tels qu'un réseau local domestique ou d'entreprise.

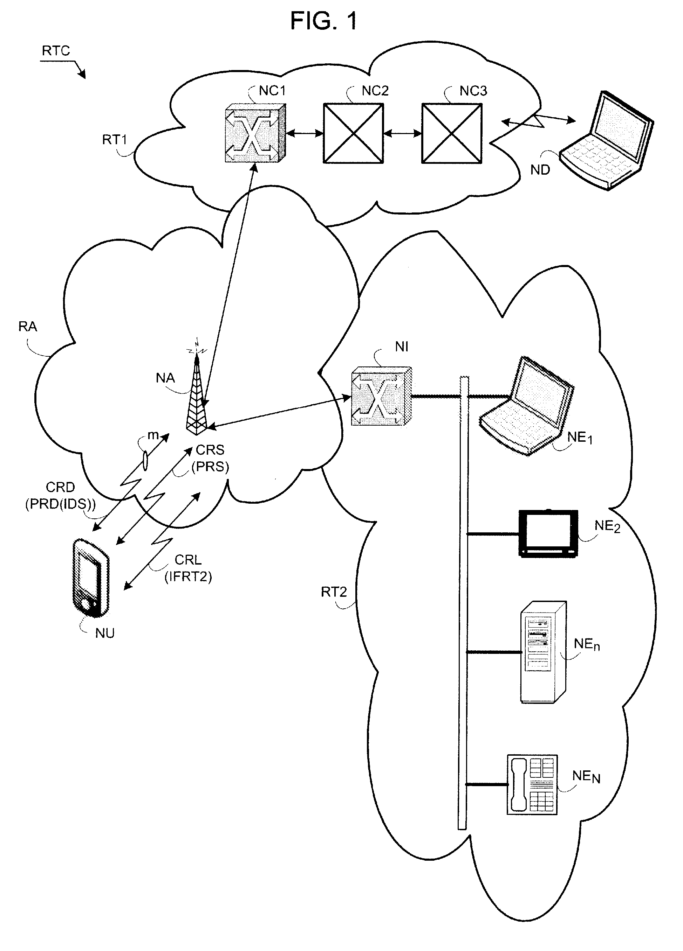

En référence à une partie de la figure 1, on connaît une architecture de réseau de télécommunications comprenant un premier noeud d'usager NU, tel qu'un terminal mobile ou un assistant numérique personnel communicant, communiquant avec un noeud destinataire ND, tel qu'un deuxième terminal mobile ou un serveur dans un réseau externe, à travers un réseau de télécommunications à accès radio RTC comportant un réseau d'accès RA et un réseau de transmission classique RT1. Le réseau d'accès RA comprend au moins un noeud d'accès NA constituant un point d'accès. Le réseau de transmission classique RT1 comprend au moins un noeud de contrôle NC1, constituant un point de contrôle, un concentrateur de point de contrôle NC2 et un noeud d'accès NC3 accédant à un réseau externe incluant le noeud destinataire ND.

Selon le modèle OSI (Organisation Internationale de Normalisation), les noeuds du réseau de télécommunications RTC possèdent des couches protocolaires hiérarchisées en nombres différents. Le noeud d'usager NU possède les sept couches protocolaires du modèle OSI qui sont successivement : une couche physique, une couche liaison de données, une couche réseau, une couche transport, une couche session, une couche présentation et une couche application. Le noeud d'accès NA du réseau d'accès RA possède successivement la couche physique et la couche de liaison de données. Les noeuds NC1, NC2 et NC3 du réseau de transmission classique RT1 possèdent chacun et successivement une couche physique, une couche liaison de données et une couche réseau. Le noeud destinataire ND du réseau externe possède successivement une couche physique, une couche liaison de données, une couche réseau, une couche transport, une couche session, une couche présentation et une couche application.

Selon l'architecture connue UMTS Pre-Release 8, le réseau d'accès RA correspond au réseau UTRAN ("Universal Terrestrial Radio Access Network" en anglais) comportant au moins une station de base Node B associée à un contrôleur de stations de base RNC ("Radio Network Controller" en anglais) dans le noeud d'accès NA. Le réseau de transmission classique RT1 correspond au réseau coeur UMTS comprenant au moins une passerelle SGSN ("Serving GPRS Support Node" en anglais) correspondant au noeud de contrôle NC1 et une passerelle GGSN ("Gateway GPRS Support Node" en anglais) correspondant aux noeuds NC2 et NC3 combinés et contrôlant plusieurs passerelles SGSN et servant de point d'accès à un réseau externe via sa fonction de routage.

Des routeurs de station de base pour connecter un noeud d'usager au réseau coeur d'un unique réseau de transmission est divulgué par la demande de brevet US 2006/0221933 A1. Un routeur de station de base possède un contrôleur de station de base RNC et plusieurs interfaces radio pour des liens radio de protocoles différents UMTS, Bluetooth ou autres, afin de sélectionner l'un de ces liens radio en fonction de la qualité d'un service destiné au noeud d'usager. Aucun autre réseau de transmission n'est connecté au routeur de station de base et chaque paquet émis par le noeud d'usager est systématiquement retransmis par le routeur de station de base vers le réseau coeur.

Selon l'architecture de réseau radio cellulaire UMTS Release 8, également connu par des travaux de spécification LTE/SAE ("Long Term Evolution / System Architecture Evolution" en anglais), le noeud d'accès NA du réseau d'accès RA constitue un noeud évolué eNB ("Evolved Node B" en anglais), le noeud de contrôle NC1 du réseau de transmission classique RT1 correspond à une passerelle de service SGW ("Serving Gateway" en anglais) et les noeuds NC2 et NC3 forment une passerelle PGW (pour "PDN Gateway", "Packet Data Network" en anglais).

Selon l'architecture HGI ("Home Gateway Initiative" en anglais), le noeud d'accès NA correspond à un point d'accès WLAN ("Wireless Local Area Network" en anglais), le noeud de contrôle NC1 correspond à un routeur HGI, et les noeuds NC2 et NC3 correspondent à un multiplexeur de ligne multiservice DSLAM ("Digital Subscriber Line Access Multiplexer "en anglais) et un serveur d'accès internet BRAS ("Broadband Remote Access Server" en anglais).

Ces architectures ne permettent pas dans le noeud d'accès NA du réseau d'accès RA l'aiguillage ou le routage de paquets de couche réseau provenant du noeud NU vers un réseau de transmission local de type réseau domestique ou réseau d'entreprise. Les paquets de couche réseau sont toujours transmis entre le noeud NU et le noeud NC1 du réseau de transmission classique RT1 d'un opérateur de réseau de radiocommunications pour mobiles par exemple, via le noeud NA. Comme indiqué précédemment, le noeud d'accès NA ne possède pas de couche réseau et est incapable de traiter des paquets de couche réseau transmis entre le noeud d'usager NU et le noeud de contrôle NC1. Le noeud d'accès NA fait office de relais d'accès et n'agit pas comme une unité de traitement de paquets. Les paquets de couche réseau échangés entre le noeud d'usager NU et le noeud de contrôle NC1 sont échangés sous forme de trames encapsulant les paquets et peuvent être transmis sous forme chiffrée ce qui rend impossible l'accès "en clair" à ces paquets et l'inspection de leurs contenus par le noeud d'accès NA.

En outre, le réseau de télécommunications RTC est hiérarchisé. Lorsque le noeud d'usager NU souhaite communiquer avec le noeud destinataire ND du réseau externe, il doit d'abord communiquer avec de nombreux noeuds intermédiaires NA, NC1, NC2 et NC3 dont le débit de transmission de données entre ces différents noeuds varie. Le canal de transmission radio reliant le noeud NU au noeud NA présente un débit faible de transmission de données. Cependant, les canaux de transmission reliant les autres noeuds NC1, NC2, NC3 et ND ont des débits de transmission de données plus élevés. La contrainte de hiérarchisation et de variation de débit entrave un accroissement de débit dans le réseau de télécommunication. Aucun aiguillage ou routage des paquets de couche réseau fournis par le noeud d'usager NU vers un autre réseau de transmission à débit plus élevé n'est possible dans le noeud d'accès NA puisque celui-ci n'accède pas à la couche réseau. En outre, le débit élevé dans le réseau de transmission classique de type réseau UMTS a un coût plus élevé que dans un réseau de transmission local.

Pour remédier aux inconvénients évoqués ci-dessus, un procédé selon la revendication indépendante 1 pour gérer un paquet de couche réseau dans un noeud d'accès communiquant avec un premier réseau de transmission et communiquant par un canal radio de données avec un noeud d'usager, comprenant une inspection d'au moins une partie du paquet de couche réseau et étant caractérisé en ce que le noeud d'accès étant connecté à un deuxième réseau de transmission, le procédé comprend en outre: un aiguillage du paquet de couche réseau inspecté vers un noeud de l'un des premier et deuxième réseaux de transmission ou vers le noeud d'usager, et entre l'inspection et l'aiguillage d'un paquet de couche réseau relatif à un service offert par un noeud d'équipement du deuxième réseau de transmission, une initiation par le noeud d'accès d'une négociation avec un noeud de contrôle du premier réseau de transmission pour établir un canal radio de données entre le noeud usager et le noeud d'accès, et une transmission du paquet de couche réseau relatif au service offert depuis le noeud d'accès vers le noeud d'usager à travers le canal radio de données établi.

Le procédé selon l'invention gère avantageusement des paquets de couche réseau depuis un noeud d'accès, tel qu'un point d'accès d'un réseau d'accès, dans un réseau de transmission afin de rediriger, c'est-à-dire aiguiller ou router, les paquets de couche réseau vers l'un des réseaux de transmission. Les techniques antérieures ne permettent qu'une transmission de paquets de couche réseau entre un noeud d'usager et un unique réseau de transmission classique tel que le réseau coeur d'un réseau UMTS.

Préalablement à l'inspection du paquet de couche réseau dans le noeud d'accès lors de l'installation du deuxième réseau, le procédé peut comprendre une détection d'une connexion au deuxième réseau de transmission et une transmission d'informations relatives au deuxième réseau de transmission au noeud d'usager. Ces informations peuvent être transmises du noeud d'accès au noeud d'usager à travers un canal radio local inconnu par le premier réseau de transmission et établi par le noeud d'accès, ou à travers un canal radio classique de signalisation connu par le premier réseau de transmission et établi par le noeud d'accès.

Afin de transmettre un paquet de couche réseau relatif à un service offert par un noeud d'équipement du deuxième réseau de transmission depuis le noeud d'accès vers le noeud d'usager, le procédé peut comprendre une négociation entre le noeud d'accès et un noeud du premier réseau de transmission pour établir un canal radio de données, supportant le paquet relatif au service, entre le noeud d'usager et le noeud d'accès.

Selon une autre exemple, entre l'inspection et l'aiguillage d'un paquet de couche réseau relatif à un service offert par un noeud d'équipement du deuxième réseau de transmission, le procédé peut comprendre une demande de négociation du noeud d'accès au noeud d'usager, la négociation étant entre le noeud d'usager et un noeud du premier réseau de transmission pour établir un canal radio de données, et une transmission du paquet de couche réseau relatif au service offert depuis le noeud d'accès vers le noeud d'usager à travers le canal radio de données établi. La négociation peut dépendre d'un ou plusieurs critères de qualité de service relatifs au service offert par le noeud d'équipement que le canal radio de données à établir doit satisfaire.

Selon encore une autre exemple, entre l'inspection et l'aiguillage d'un paquet de couche réseau relatif à un service offert par un noeud d'équipement du deuxième réseau de transmission, le procédé peut comprendre une sélection d'un canal radio de données préétabli par le noeud d'accès pour une communication précédente entre le noeud d'usager et un noeud de l'un des premier et deuxième réseaux de transmission, et une transmission du paquet de couche réseau relatif au service offert depuis le noeud d'accès vers le noeud d'usager à travers le canal radio de données sélectionné.

L'invention a aussi pour objet un noeud d'accès selon la revendication indépendante 9 pour gérer un paquet de couche réseau, apte à communiquer avec un premier réseau de transmission et par un canal radio de données avec un noeud d'usager, comprenant un moyen pour inspecter au moins une partie du paquet de couche réseau et caractérisé en ce que qu'il comprend:un moyen pour aiguiller le paquet de couche réseau inspecté vers un noeud de l'un des premier et deuxième réseaux de transmission ou vers le noeud d'usager,un moyen pour négocier avec un noeud de contrôle du premier réseau de transmission l'établissement du canal radio de données avec le noeud usager, et un moyen pour transmettre un paquet de couche réseau relatif à un service offert par un noeud d'équipement du deuxième réseau de transmission, depuis le noeud d'accès vers le noeud d'usager à travers le canal radio de données établi.

Selon des exemples du noeud d'accès selon l'invention, celui-ci peut comprendre un moyen pour négocier entre le noeud d'accès et un noeud du premier réseau de transmission l'établissement d'un canal radio de données, un moyen pour demander au noeud d'usager de négocier avec un noeud du premier réseau de transmission l'établissement d'un canal radio de données, un moyen pour sélectionner un canal radio de données préétabli par le noeud d'accès pour une communication précédente entre le noeud d'usager et un noeud de l'un des premier et deuxième réseaux de transmission, et un moyen pour transmettre un paquet de couche réseau relatif à un service offert par un noeud d'équipement du deuxième réseau de transmission, depuis le noeud d'accès vers le noeud d'usager à travers le canal radio de données sélectionné.

L'invention se rapporte encore à un programme d'ordinateur selon la revendication indépendante 13 apte à être mis en oeuvre dans un noeud d'accès pour gérer un paquet de couche réseau communiquant avec un premier réseau de transmission et par un canal radio de données avec un noeud d'usager, ledit programme étant caractérisé en ce qu'il comprend des instructions qui, lorsque le programme est exécuté dans ledit noeud d'accès, réalisent: une inspection d'au moins une partie du paquet de couche réseau, etun aiguillage du paquet de couche réseau inspecté vers un noeud de l'un des premier et deuxième réseaux de transmission ou vers le noeud d'usager, et entre l'inspection et l'aiguillage d'un paquet de couche réseau relatif à un service offert par un noeud d'équipement du deuxième réseau de transmission, une initiation par le noeud d'accès d'une négociation avec un noeud du premier réseau de transmission pour établir un canal radio de données entre le noeud usager et le noeud d'accès, et une transmission du paquet de couche réseau relatif au service offert depuis le noeud d'accès vers le noeud d'usager à travers le canal radio de données établi.

L'invention se rapporte encore à un support d'enregistrement selon la revendication indépendante 14 lisible par un noeud d'accès pour gérer un paquet de couche réseau apte à communiquer avec un premier réseau de transmission et par un canal radio de données avec un noeud d'usager, ledit support d'enregistrement étant caractérisé en ce qu'il a enregistré un programme d'ordinateur comportant des instructions pour l'exécution d'une inspection d'au moins une partie du paquet de couche réseau, d'un aiguillage du paquet de couche réseau inspecté vers un noeud de l'un des premier et deuxième réseaux de transmission ou vers le noeud d'usager, et entre l'inspection et l'aiguillage d'un paquet de couche réseau relatif à un service offert par un noeud d'équipement du deuxième réseau de transmission, d'une initiation par le noeud d'accès d'une négociation avec un noeud de contrôle du premier réseau de transmission pour établir un canal radio de données entre le noeud usager et le noeud d'accès, et une transmission du paquet de couche réseau relatif au service offert depuis le noeud d'accès vers le noeud d'usager à travers le canal radio de données établi.

D'autres caractéristiques et avantages de la présente invention apparaîtront plus clairement à la lecture de la description suivante de plusieurs réalisations de l'invention selon les revendications indépendantes données à titre d'exemples non limitatifs, en référence aux dessins annexés correspondants dans lesquels :
- la figure 1 est un bloc-diagramme schématique d'un réseau de télécommunications selon l'invention ;
- la figure 2 est un bloc-diagramme schématique plus détaillé du réseau de télécommunications selon l'invention ;
- la figure 3 est un schéma représentatif des champs d'un paquet de couche réseau inspecté et aiguillé/routé par un noeud d'accès selon l'invention ;
- la figure 4 est un algorithme d'une étape de dialogue d'un procédé de gestion de paquet de couche réseau selon l'invention ; et
- les figures 5 et 6 sont des algorithmes représentatifs d'étapes d'inspection et d'aiguillage/routage d'un procédé de gestion de paquet de couche réseau respectivement selon deux réalisations de l'invention.

L'invention a trait à un réseau de télécommunications RTC tel que décrit précédemment et montré à la figure 1. Le réseau RTC selon l'invention comprend, outre le réseau d'accès RA et le premier réseau de transmission classique RT1 d'un opérateur de radiocommunications pour mobiles par exemple, un réseau de transmission local RT2 tel qu'un réseau domestique de type "Home LAN" ("Local Area Network" en anglais) ou un réseau d'entreprise de type "Corporate LAN" comportant N noeuds d'équipement domestique NE₁ à NE_{N} communiquant avec le noeud d'accès NA du réseau d'accès RA. Le réseau de transmission local RT2 comprend également un noeud intermédiaire NI faisant office de passerelle relayant des échanges de paquets entre le noeud d'accès NA et au moins l'un NEₙ des noeuds d'équipement, avec 1 ≤ n ≤ N.

En variante, le noeud intermédiaire NI est supprimé.

Selon une autre variante, le noeud intermédiaire NI et le noeud de contrôle NC1 sont fusionnés mais conservent leurs fonctions respectives.

Les noeuds d'équipement domestique NE₁ à NE_{N} sont par exemple, un ordinateur personnel NE₁, une télévision numérique NE₂, un serveur multidiffusion propriétaire NEₙ comme un serveur diffusant des programmes télévisés, un téléphone fixe NE_{N}, et tout autre dispositif numérique capable de communiquer avec le noeud d'accès NA via le réseau de transmission local RT2.

Les noeuds NA et NU s'échangent des paquets de couche réseau via deux types de canaux radio classiques distincts : un canal radio classique de signalisation CRS pour échanger des paquets de signalisation PRS, et un ou m canaux radio classiques de données CRD pour échanger des paquets de données de service PRD. Ces canaux radio classiques sont établis et alloués par le noeud d'accès NA au noeud d'usager NU et peuvent être approuvés par le noeud de contrôle NC1 du réseau de transmission classique RT1. Le canal de signalisation CRS est établi lors de l'attachement du noeud d'usager NU au noeud d'accès NA et du signalement de cet attachement auprès du noeud de contrôle NC1. Les paquets de signalisation PRS contiennent des informations de contrôle du réseau de télécommunications RTC et comprennent par exemple des requêtes, des réponses et des acquittements incluant parfois des données informatives, afin par exemple d'établir et d'allouer des canaux radio de données de service CRD.

Un canal de données CRD est établi afin de transmettre un service entre le noeud d'usager NU et un noeud ND du réseau de transmission RT1 ou un noeud NEₙ du réseau de transmission RT2. La qualité de service de chaque canal de données CRD correspond à des critères de qualité du service dispensé par le noeud ND ou NEₙ. Les paquets de données de service PRD incluent par exemple des données textuelles et/ou audio et/ou vidéo relatives à des services dispensés par les noeuds serveurs ND du réseau traditionnel classique RT1 ou des noeuds d'équipement NEₙ du réseau de transmission local RT2. Les paquets de données PRD peuvent contenir notamment une demande de service incluant un identificateur IDS du service demandé ou une réponse incluant le service demandé.

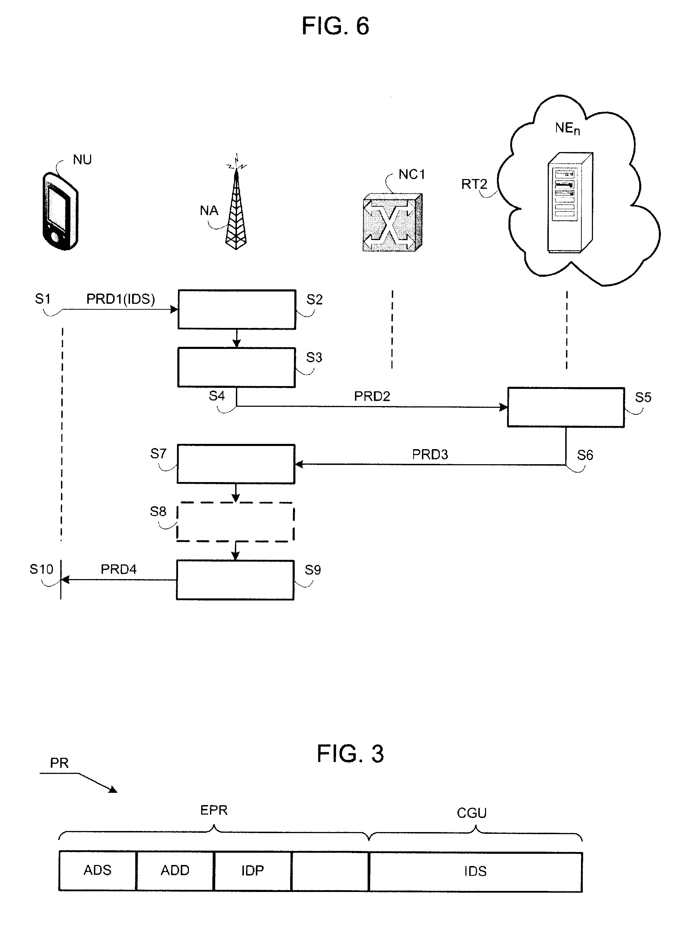

Comme montré à la figure 3, un paquet de couche réseau PR, tel qu'un paquet de signalisation PRS ou un paquet de données PRD, comprend des champs d'entête réseau EPR et un champ de charge utile CGU incluant des données utiles. Les données des champs d'en-tête réseau EPR sont au moins une adresse source ADS, une adresse de destination ADD et un identificateur de protocole IDP indiquant la nature du protocole relatif aux données de la charge utile CGU. L'en-tête EPR et la charge utile CGU peuvent comprendre également des données relatives aux couches supérieures du modèle OSI qui sont la couche transport, la couche session, la couche présentation et la couche application.

Les données utiles incluses dans la charge utile CGU d'un paquet de données PRD sont en particulier des requêtes de service contenant un identificateur de service IDS ou des réponses comportant le service requis. Selon un exemple, les données utiles comprennent une requête d'un programme télévisé spécifique comportant un identificateur du programme sous forme d'une adresse multidiffusion. L'identificateur de protocole IDP relatif à ce type de service correspond au protocole IGMP ("Internet Group Management Protocol" en anglais).

Les données utiles incluses dans la charge utile CGU d'un paquet de signalisation PRS sont par exemple relatives à une négociation entre le noeud d'accès NA ou le noeud d'usager NU et le noeud de contrôle NC1 pour établir un canal radio de données de service entre les noeuds NA et NU.

Un dernier canal radio local CRL est établi par le noeud d'accès NA entre les noeuds NA et NU, et est inconnu du noeud de contrôle NC1. A travers le canal CRL, le noeud NA transmet au noeud NU des informations de couche réseau IFRT2 relatives au réseau de transmission local RT2. Ces informations IFRT2 comprennent notamment une adresse réseau du noeud d'accès NA, une adresse réseau du noeud intermédiaire NI et un masque de sous-réseau associé au réseau RT2 représentatif d'un plan d'adressage des noeuds d'équipement NE₁ à NE_{N} du réseau RT2.

En variante, le canal radio classique de signalisation CRS peut également être utilisé pour transmettre les informations IFRT2 relatives au réseau de transmission local RT2 depuis le noeud NA au noeud NU.

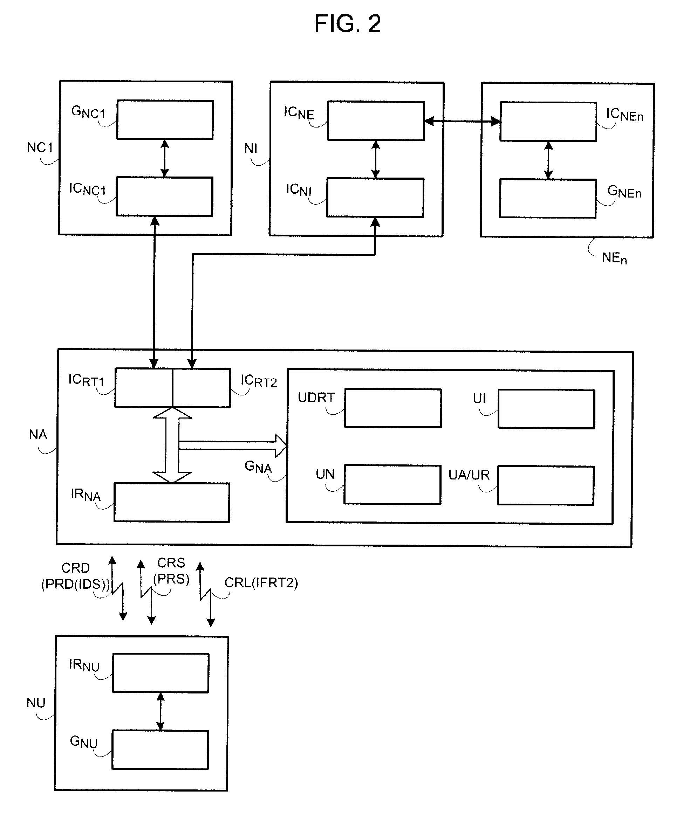

Chacun des noeuds NU, NA, NC1, NI, et NEₙ du réseau de télécommunications RTC selon l'invention est représenté à la figure 2 sous forme de blocs fonctionnels dont la plupart assurent des fonctions ayant un lien avec l'invention et peuvent correspondre à des modules logiciels implémentés dans au moins un processeur et/ou à des modules matériels dédiés ou programmables dans le noeud.

Le noeud d'usager NU est par exemple un assistant numérique personnel communicant PDA ("Personal Digital Assistant" en anglais) capable de communiquer avec un réseau d'accès d'un réseau de télécommunications de type UMTS. Selon d'autres réalisations, le noeud d'usager NU comporte toutes les fonctionnalités d'un terminal radio mobile et est du type téléphone intelligent ("SmartPhone" en anglais) ou ordinateur personnel capable de communiquer avec un réseau de télécommunications de type UMTS. Le noeud d'usager NU comprend notamment une interface radio IR_{NU} pour communiquer avec le noeud d'accès NA du réseau d'accès via l'un des canaux radio CRS, CRD et CRL, et un gestionnaire G_{NU} pour traiter, d'une part, des communications de paquets de couche réseau PRD et PRS et les informations IFRT2 avec le noeud NA et, d'autre part, des applications spécifiques au noeud d'usager.

Le noeud de contrôle NC1 du réseau de transmission classique RT1 peut comprendre une interface de communication par paquet IC_{NC1} pour transmettre et recevoir des paquets de couche réseau vers et depuis le noeud d'accès NA. Le noeud de contrôle NC1 peut comprendre également un gestionnaire G_{NC1} pour traiter des paquets de couche réseau transmis depuis le noeud d'accès NA ou un autre noeud du réseau de transmission classique RT1 ou à transmettre vers ceux-ci afin, par exemple, d'obtenir des premiers services requis par le noeud NU et dispensés par des noeuds serveurs du réseau RT1 ou des noeuds ND d'un réseau externe relié au réseau RT1. Le gestionnaire G_{NC1} peut négocier avec le noeud d'accès NA ou le noeud d'usager NU pour établir les canaux radio CRS et CRD.

Selon une première variante, la transmission et la réception des paquets de couche réseau vers et depuis le noeud d'accès NA sont assurées par l'un des autres noeuds NC2 et NC3. Selon une deuxième variante, le noeud d'accès NA s'acquitte lui-même de l'établissement des canaux radio.

Le noeud intermédiaire NI du réseau de transmission local RT2 est une passerelle de communication et comprend notamment une interface de communication par paquet IC_{NI} pour transmettre et recevoir des paquets de couche réseau vers et depuis le noeud d'accès NA, et une interface de communication IC_{NE} pour transmettre et recevoir des paquets de couche réseau vers et depuis au moins l'un des noeuds d'équipement NEₙ du réseau de transmission local RT2.

Un noeud d'équipement NEₙ du réseau de transmission local RT2 comprend au moins une interface de communication par paquet IC_{NEn} pour transmettre et recevoir des paquets de couche réseau vers et depuis l'interface de communication par paquet IC_{NE} du noeud intermédiaire NI, et un gestionnaire G_{NEn} pour traiter les paquets de couche réseau reçus et établir des paquets de couche réseau à transmettre. Le gestionnaire G_{NEn} traite également des applications spécifiques au noeud d'équipement NEₙ.

En variante le noeud NI est supprimé et l'interface IC_{NEn} du noeud d'équipement NEₙ est apte à communiquer directement avec le noeud d'accès NA du réseau d'accès RA.

Le noeud d'accès NA est considéré comme un point d'accès, tel qu'une station de base, et comprend une interface radio IR_{NA} pour communiquer avec l'interface radio IR_{NU} du noeud d'usager NU via les canaux radio CRD, CRS et CRL.

Le noeud NA comprend également deux interfaces de communication par paquet IC_{RT1} et IC_{RT2} pour transmettre et recevoir des paquets de couche réseau vers et depuis respectivement l'interface de communication par paquet IC_{NC1} du noeud NC1 et l'interface de communication par paquet IC_{NI} du noeud NI. Le noeud NA comprend, en outre, un gestionnaire G_{NA} contenant une unité de détection UDRT, une unité d'inspection de paquet de couche réseau UI, une unité d'aiguillage/routage de paquet de couche réseau UA/UR et une unité de négociation UN.

Une unité de détection UDRT détecte une connexion d'un réseau de transmission local tel que le réseau RT2 lors de l'installation de celui-ci ou du noeud NA. L'unité UDRT établit le canal radio local CRL entre les interfaces radio IR_{NA} et IR_{NU} pour transmettre les informations IFRT2 relatives au réseau RT2.

En variante, l'unité UDRT utilise le canal radio classique de signalisation CRS, pour échanger des paquets de signalisation PRS contenant les informations IFRT2 relatives au réseau RT2.

Selon une autre variante, la fonction de détection de l'unité UDRT est remplie par le noeud d'usager NU.

L'unité d'inspection UI inspecte et analyse au moins une partie de chacun des paquets de couche réseau PRD et PRS transmis par les interfaces IC_{NC1}, IC_{NI} et IR_{NU} et reçus par les interfaces IC_{RT1}, IC_{RT2} et IR_{NA} afin de prendre une décision sur l'aiguillage ou le routage de chaque paquet reçu selon le type de service référencé dans le paquet et/ou le destinataire concerné par le paquet.

L'unité d'aiguillage/routage UA/UR aiguille ou route, selon des réalisations de l'invention, les paquets de couche réseau inspectés chacun vers l'un des deux réseaux de transmission RT1 et RT2 ou vers le noeud d'usager NU.

L'unité de négociation UN du noeud d'accès NA sélectionne un canal radio de données CRD déjà établi ou initie une négociation avec le noeud de contrôle NC1 du réseau RT1 pour établir un canal radio de données CRD, afin que le noeud d'usager NU accède, via ce canal radio sélectionné ou négocié, à un service offert par un noeud d'équipement NEₙ du réseau de transmission local RT2.

En variante, l'unité UN initie une négociation avec le noeud d'usager UN, via le noeud d'accès NA, afin que le noeud d'usager établisse un canal radio de données CRD et accède, via ce canal radio négocié, à un service offert par un noeud d'équipement NEₙ du réseau de transmission local RT2.

Selon une première réalisation de l'invention, le noeud d'accès NA ne possède pas de couche réseau. L'unité d'inspection UI lit une partie des champs d'en-tête de paquets de signalisation PRS ou de données PRD interceptés par le noeud NA. L'unité d'aiguillage UA aiguille chaque paquet de couche réseau inspecté vers un noeud NC1 du réseau de transmission RT1 ou NEₙ du réseau de transmission RT2 en modifiant ou non une partie des champs d'en-tête du paquet de couche réseau.

Selon une deuxième réalisation de l'invention, le noeud d'accès NA possède une couche réseau et l'unité d'inspection UI inspecte et analyse alors l'intégralité des champs d'en-tête du paquet de couche réseau PRS ou PRD. L'unité de routage UR génère un nouveau paquet de couche réseau dont le contenu est analogue ou sensiblement analogue au paquet de couche réseau inspecté, mais dont le format peut être est adapté au réseau de transmission destinataire de ce paquet.

Le procédé de gestion de paquets de couche réseau dans le noeud NA comprend trois étapes qui sont :
- une étape de dialogue entre les noeuds NU, NA et NEₙ pour établir des échanges avec le réseau de transmission local RT2,
- une étape d'inspection des paquets de couche réseau pouvant transiter entre, d'une part, le noeud NU et le noeud NC1 du réseau de transmission classique RT1, et d'autre part, le noeud NU et le noeud NEₙ du réseau de transmission local RT2, via le noeud NA, et
- une étape d'aiguillage/routage des paquets de couche réseau inspectés depuis le noeud NA vers les noeuds NU, NC1 et NEₙ.

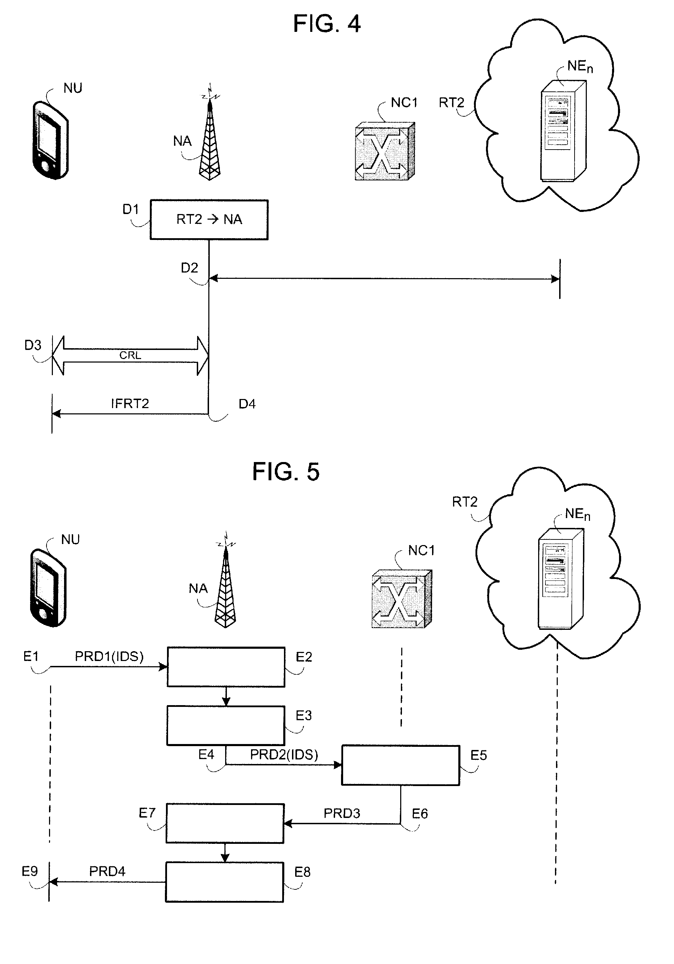

En référence à la figure 4, l'étape de dialogue comprend les étapes D1 à D4.

Lors de l'installation du noeud d'accès NA, par exemple, par l'opérateur du réseau de transmission RT1 ou lors de l'installation du réseau de transmission local RT2 à proximité du noeud NA, l'unité de détection UDRT du noeud NA détecte une connexion du réseau de transmission local RT2 au noeud NA, à l'étape D1. Par un échange de signalisation entre le noeud NA et les noeuds d'équipement NE₁ à NE_{N} via, le cas échéant, le noeud NI du réseau de transmission local RT2, l'unité de détection UDRT du noeud NA découvre les noeuds NE₁ à NE_{N} du réseau RT2 et les différents services offerts par les noeuds NE₁ à NE_{N}, à l'étape D2.

A l'étape D3, l'unité de détection UDRT commande l'établissement d'un canal radio local de signalisation CRL entre l'interface radio IR_{NU} du noeud d'usager NU et l'interface radio IR_{NA} du noeud d'accès NA afin que le noeud d'accès NA transmette au noeud NU des informations de couche réseau IFRT2 concernant le réseau de transmission local RT2 détecté, à l'étape D4. Le canal radio local CRL est établi dès que le noeud d'usager NU est mis sous tension et s'est fait connaître auprès du réseau de transmission classique RT1. Le noeud de contrôle NC1 du réseau de transmission RT1 ignore le canal radio local CRL.

En variante, le noeud d'accès NA peut également utiliser le canal radio classique de signalisation CRS pour transmettre au noeud d'usager NU les informations de couche réseau IFRT2 concernant le réseau local RT2.

A chaque modification de l'installation du réseau de transmission local RT2 par suppression ou adjonction d'un autre noeud d'équipement ou d'un service d'un équipement, l'unité UDRT du noeud NA détecte la modification et en informe le noeud NU via le canal radio local CRL ou via le canal radio classique de signalisation CRS.

En variante, le noeud NU comprend un module logiciel de détection qui détecte l'adjonction ou la suppression des noeuds NE₁ à NEₙ du réseau de transmission local RT2 et les différents services associés dans le réseau RT2, à l'étape D2.

Selon la première réalisation de l'invention relativement au noeud NA qui ne possède pas de couche réseau, les informations de couche réseau IFRT2 sont transmises par le réseau de transmission classique RT1 au noeud d'accès NA. Par exemple, un routeur HGI représenté pour partie par le noeud NC1 et pour partie par le noeud NI est contrôlé par l'opérateur du réseau de transmission classique RT1. L'opérateur connaît l'installation des différents noeuds d'équipement connectés dans le deuxième réseau de transmission RT2.

Selon la deuxième réalisation de l'invention relativement au noeud NA qui possède une couche réseau, les informations de couche réseau IFRT2 sont requises par le noeud NA aux différents noeuds d'équipement du réseau RT2 en diffusant vers le réseau RT2 une demande d'information incluse dans un paquet de couche réseau généré par l'unité de routage UR et transmis via l'interface de communication IC_{RT2}.

En référence aux figures 5 et 6, les étapes d'inspection et d'aiguillage/routage du procédé de gestion relatives à un paquet comprennent les étapes E1 à E9 et S1 à S10 respectivement en fonction du réseau de transmission RT1 ou RT2 destinataire du paquet.

A l'étape E1-S1, le noeud d'usager NU requiert un service en transmettant une demande incluse dans un premier paquet de couche réseau PRD1 dont la charge utile contient l'identificateur IDS du service demandé. L'adresse de destination ADD dans l'en-tête du paquet de couche réseau PRD1 correspond à l'adresse d'un noeud de l'un des deux réseaux de transmission RT1 et RT2.

En référence à l'étape S1 à la figure 6, le noeud NU demande un service dispensé par l'un des noeuds d'équipement du réseau RT2 et choisit pour adresse de destination ADD l'adresse, le cas échéant, du noeud intermédiaire NI et le masque de réseau associé. L'adresse, le cas échéant, du noeud intermédiaire et le masque de réseau sont contenus préalablement dans les informations IFRT2 reçues à l'étape D4. Le paquet de couche réseau PRD1 incluant la demande de service est alors diffusé à l'ensemble des noeuds d'équipement ayant un début d'adresse réseau correspondant au masque.

Le paquet de couche réseau PRD1 est transmis depuis l'interface radio IR_{NU} du noeud NU à l'interface radio IR_{NA} du noeud NA via l'un des canaux radio de données CRD préétablis entre le noeud d'usager NU et le noeud d'accès NA lors l'attachement du noeud NU au noeud NA et du signalement de cet attachement auprès du noeud de contrôle NC1 du réseau de transmission classique RT1.

A l'étape E2-S2, l'interface radio IR_{NA} du noeud NA reçoit le paquet de couche réseau PRD1 incluant la demande de service. L'unité d'inspection UI inspecte le paquet reçu et en extrait l'adresse source ADS, l'adresse de destination ADD, l'identificateur de protocole IDP et une référence au service tel que l'identificateur de service IDS.

L'unité d'inspection UI analyse les données récupérées et décide de sélectionner le réseau de transmission vers lequel le paquet de couche réseau doit être aiguillé.

Selon un premier exemple, l'aiguillage du paquet est décidé en fonction de l'adresse de destination ADD correspondant à un ou plusieurs noeuds de l'un des réseaux de transmission RT1 et RT2.

Selon un autre exemple, l'aiguillage est décidé en fonction du type de service demandé et d'une condition d'aiguillage. Le service peut être offert par l'un des réseaux de transmission RT1 et RT2, ou par les deux réseaux. Lorsque le service est offert par un seul des deux réseaux de transmission du noeud NA et qui ne correspond pas à l'adresse de destination ADD, l'unité d'aiguillage/routage UA/UR modifie à l'étape E3, S3 l'adresse de destination dans le paquet PRD1 pour aiguiller/router le paquet PRD1 ainsi modifié en un paquet PRD2 vers le réseau de transmission offrant le service. Lorsque les deux réseaux de transmission offrent le même service, la décision d'aiguillage/routage est établie en fonction d'une condition d'aiguillage/routage. Par exemple, la condition d'aiguillage/routage fait référence au coût de la transmission du service : si le coût est plus faible via le réseau local RT2 que via le réseau classique RT1, le paquet modifié est aiguillé/routé vers le réseau RT2. Selon un autre exemple, la condition d'aiguillage/routage concerne le débit de transmission qui est plus élevé dans le réseau local RT2 que dans le réseau classique RT1. L'unité UA/UR modifie ou non l'adresse de destination ADD du paquet de couche réseau, à l'étape E3, S3, pour transmettre le paquet de couche réseau PRD2 vers le réseau de transmission respectant la condition d'aiguillage/routage, à l'étape E4, S4. Si l'adresse ADD du paquet PRD2 correspond à une adresse d'un noeud ND du réseau de transmission classique RT1, le paquet PRD2 est transmis vers le réseau RT1 à l'étape E4. Si l'adresse ADD du paquet PRD2 correspond à une adresse d'un noeud NEₙ du réseau de transmission local RT2, le paquet PRD2 est transmis vers le réseau RT2 à l'étape S4.

A l'étape E5, S5, le noeud ND ou NEₙ offrant le service demandé recherche le service et transmet au noeud d'accès NA la réponse contenant le service incluse dans un paquet de couche réseau PRD3, à l'étape E6, S6. Après réception du paquet PRD3 par l'interface de communication IR_{NA} du noeud NA, l'unité d'inspection UI inspecte le paquet PRD3 à l'étape E7, S7 et l'unité d'aiguillage/routage UA/UR aiguille/route le paquet inspecté désigné par PRD4 vers le noeud d'usager NU à l'étape E8, S9. Le noeud NU reçoit alors le paquet PRD4 via l'un des canaux radio de données classiques CRD, à l'étape E9, S10.

Selon la première réalisation de l'invention relative au noeud NA qui ne possède pas de couche réseau, l'unité d'inspection UI n'inspecte qu'une partie des champs d'en-tête du paquet de couche réseau et une partie du champ de charge utile du paquet pour obtenir les adresses de source et de destination et, une référence du service telle que l'identificateur IDS de celui-ci. Les unités d'inspection UI et d'aiguillage UA accèdent à et modifient une partie des champs d'en-tête du paquet de couche réseau, par exemple en supprimant l'en-tête de couche liaison pour obtenir le paquet de couche réseau et y modifier le cas échéant l'adresse de destination ADD.

Selon la deuxième réalisation de l'invention relative au noeud NA possédant une couche réseau, l'unité d'inspection UI inspecte l'intégralité des champs d'en-tête du paquet de couche réseau. L'unité de routage UR génère un nouveau paquet de couche réseau contenant les données nécessaires pour router le paquet vers le réseau de transmission sélectionné.

Le procédé comprend également une étape S8 de sélection et/ou négociation de qualité de service ou d'établissement de canal radio de données CRD afin d'offrir au réseau de transmission local RT2 une qualité de service négociée avec le réseau de transmission classique RT1 et de la modifier si nécessaire.

Lorsque le noeud d'usager NU se connecte au réseau de transmission classique RT1 de l'opérateur pour accéder à un premier service, le noeud d'accès NA alloue au noeud d'usager NU, en accord avec le noeud de contrôle NC1, un ou plusieurs canaux radio de données CRD dont la ou les qualités de service correspondent au premier service demandé et dispensé par un noeud du réseau RT1 à des étapes E1 à E9. La qualité de service correspond par exemple à des critères d'un service de transmission de données audio ou vidéo.

Puis après une demande par le noeud d'usager NU d'un deuxième service offert par l'un des noeuds d'équipement du réseau RT2 à des étapes S1 à S7, le noeud d'accès NA décide d'aiguiller/router à une étape S9 un paquet de couche réseau PRD4 du réseau local RT2. Si l'un des canaux radio de données CRD déjà établis mais non alloués possède une qualité de service satisfaisant partiellement les critères de qualité de service du deuxième service, ce canal radio de données est sélectionné à une étape S8 précédant l'étape S9 par l'unité de négociation UN du noeud NA pour transmettre le deuxième service. Si les qualités de service des canaux radio de données déjà établis ne correspondent pas aux critères de qualité de service du deuxième service ou si tous les canaux CRD sont déjà alloués, l'unité de négociation UN du noeud NA initie à l'étape S8 une négociation avec le noeud de contrôle NC1 du réseau classique RT1 pour établir un nouveau canal radio de données CRD dont la qualité de service satisfait en partie les critères de qualité de service du deuxième service provenant du réseau local RT2.

En variante et selon la deuxième réalisation de l'invention, l'unité de négociation UN du noeud NA établit une requête à l'attention du noeud d'usager NU pour initier la négociation de l'établissement d'un canal radio de données CRD avec le noeud NC1 depuis le noeud NU. La requête est incluse dans un paquet de couche réseau généré par l'unité de routage UR du noeud d'accès NA et est transmise au noeud NU via le canal radio classique de signalisation CRS ou via le canal radio local CRL depuis l'interface radio IR_{NA}.

Selon une autre variante, le noeud d'équipement NEₙ du réseau RT2 fournissant le deuxième service comprend une unité de sélection et de négociation pour mandater le noeud d'accès NA à sélectionner un canal radio de données ayant une qualité de service correspondant aux critères de qualité de service du deuxième service, ou à initier une négociation d'établissement d'un canal radio de données via le noeud NA ou le noeud NU avec le noeud NC1.

Une application de l'invention se rapporte à un réseau de transmission de type HGI ("Home Gateway Initiative" en anglais) comprenant un noeud intermédiaire N_{HGI} dont une partie du noeud N_{HGI} est dédiée à l'accès au réseau de transmission RT1 et correspond au noeud NC1, et l'autre partie du noeud N_{HGI} est dédiée à l'accès au réseau de transmission RT2 et correspond au noeud NI.

Dans une communication multidiffusion ("multicast" en anglais), le noeud d'usager NU accède via le noeud NC1 à des services multidiffusion offerts par le réseau de transmission RT1 ou à des services multidiffusion offerts par un noeud d'équipement NEₙ du réseau de transmission RT2.

L'unité d'inspection UI du noeud d'accès NA décide de l'aiguillage d'une demande d'un service multidiffusion émis par le noeud NU vers le réseau de transmission le plus adapté, en fonction des informations contenues dans le paquet de couche réseau incluant la demande, telles que l'identificateur de protocole IDP qui peut être le protocole de type IGMP et l'identificateur de service IDF qui est l'adresse multidiffusion du service demandé. Selon un premier cas, l'un des deux réseaux n'offre pas le service multidiffusion demandé, le noeud NA aiguillant alors le paquet de couche réseau vers l'autre réseau de transmission. Selon un deuxième cas, les deux réseaux offrent le service demandé, le noeud NA aiguillant alors le paquet de couche réseau contenant la demande de service vers le réseau de transmission local RT2 afin, par exemple, de diminuer la charge de transmission du réseau de transmission classique RT1.

Un exemple de communication de réseau point à point ("unicast" en anglais) concerne le téléchargement de fichiers musicaux ou vidéo depuis un noeud de l'un des réseaux de transmission RT1 et RT2 vers le noeud d'usager NU. Selon un autre exemple, lors d'une communication en visioconférence, le noeud d'usager NU retransmet via le noeud d'accès NA un signal audio et/ou vidéo à un noeud d'équipement NEₙ, tel qu'un téléviseur numérique, du réseau de transmission local RT2, et inversement le noeud d'équipement NEₙ retransmet via le noeud d'accès NA un signal audio et/ou vidéo au noeud d'usager NU.

L'invention décrite ici concerne un procédé et un noeud d'un réseau d'accès dans un réseau de télécommunications pour gérer des paquets de couche réseau. Selon une implémentation, les étapes du procédé de l'invention sont déterminées par les instructions d'un programme d'ordinateur incorporé dans le noeud. Le programme comporte des instructions de programme qui, lorsque ledit programme est exécuté dans un processeur du noeud, dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

## Revendications

1. Procédé pour gérer un paquet de couche réseau (PRS, PRD) dans un noeud d'accès (NA) communiquant avec un premier réseau de transmission (RT1) et communiquant par un canal radio de données (CRD) avec un noeud d'usager (NU), comprenant une inspection (E2-S2, E7-S7) d'au moins une partie (ADS, ADD, IDP, IDS) du paquet de couche réseau (PRS, PRD) et étant **caractérisé en ce que** le noeud d'accès étant connecté à un deuxième réseau de transmission (RT2), le procédé comprend en outre :
un aiguillage (E3-S3, E8-S9) du paquet de couche réseau inspecté vers un noeud (NC1, NEₙ) de l'un des premier et deuxième réseaux de transmission (RT1, RT2) ou vers le noeud d'usager, et
entre l'inspection (S7) et l'aiguillage (S9) d'un paquet de couche réseau relatif à un service offert par un noeud d'équipement (NEₙ) du deuxième réseau de transmission, une initiation par le noeud d'accès d'une négociation (S8) avec un noeud de contrôle (NC1) du premier réseau de transmission (RT1) pour établir un canal radio de données (CRD) entre le noeud usager (NU) et le noeud d'accès (NA), et une transmission du paquet de couche réseau relatif au service offert depuis le noeud d'accès (NA) vers le noeud d'usager à travers le canal radio de données (CRD) établi.

2. Procédé conforme à la revendication 1, comprenant préalablement à l'inspection du paquet de couche réseau (PRS, PRD), une détection (D1) d'une connexion du deuxième réseau de transmission (RT2) et une transmission (D4) d'informations (IFRT2) relatives au deuxième réseau de transmission au noeud d'usager (NU),

3. Procédé conforme à la revendication 2, selon lequel les informations (IFRT2) relatives au deuxième réseau de transmission (RT2) sont transmises du noeud d'accès (NA) au noeud d'usager (NU) à travers un canal radio local (CRL) inconnu par le premier réseau de transmission (RT1) et établi par le noeud d'accès (NA).

4. Procédé conforme à la revendication 2, selon lequel les informations (IFRT2) relatives au deuxième réseau de transmission (RT2) sont transmises du noeud d'accès (NA) au noeud d'usager (NU) à travers un canal radio classique de signalisation (CRS) connu par le premier réseau de transmission (RT1) et établi par le noeud d'accès (NA).

5. Procédé conforme à l'une quelconque des revendications 1 à 4, dans lequel la négociation est réalisée entre le noeud d'accès (NA) et le noeud de contrôle (NC1).

6. Procédé conforme à l'une quelconque des revendications 1 à 4, dans lequel la négociation comprend l'envoi d'une requête de négociation à l'attention du noeud usager (NU), la négociation étant entre le noeud d'usager (NU) et le noeud (NC1) de contrôle.

7. Procédé conforme à l'une quelconque des revendications 1 à 3, selon lequel la négociation dépend d'au moins un critère de qualité relatif au service offert par le noeud d'équipement (NEₙ) que le canal radio de données (CRD) à établir doit satisfaire.

8. Procédé conforme à l'une quelconque des revendications 1 à 3, comprenant entre l'inspection (S7) et l'aiguillage (S9) d'un paquet de couche réseau relatif à un service offert par un noeud d'équipement (NEₙ) du deuxième réseau de transmission, une sélection d'un canal radio de données (CRD) préétabli par le noeud d'accès (NA) pour une communication précédente entre le noeud d'usager (NU) et un noeud (NC1, NEₙ) de l'un des premier et deuxième réseaux de transmission (RT1, RT2), et une transmission du paquet de couche réseau relatif au service offert depuis le noeud d'accès vers le noeud d'usager à travers le canal radio de données sélectionné.

9. Noeud d'accès (NA) pour gérer un paquet de couche réseau (PRS, PRD), apte à communiquer avec un premier réseau de transmission (RT1) et par un canal radio de données (CRD) avec un noeud d'usager (NU), comprenant un moyen (UI) pour inspecter au moins une partie du paquet de couche réseau et **caractérisé en ce que** qu'il comprend:
un moyen (UA/UR) pour aiguiller le paquet de couche réseau inspecté vers un noeud (NC1, NEₙ) de l'un des premier et deuxième réseaux de transmission (RT1, RT2) ou vers le noeud d'usager,
un moyen (UN) pour négocier avec un noeud de contrôle (NC1) du premier réseau de transmission (NC1) l'établissement du canal radio de données avec le noeud usager (NU), et
un moyen (IR_{NA}) pour transmettre un paquet de couche réseau relatif à un service offert par un noeud d'équipement (NEₙ) du deuxième réseau de transmission, depuis le noeud d'accès vers le noeud d'usager à travers le canal radio de données établi.

10. Noeud d'accès (NA) conforme à la revendication 9, dans lequel le moyen (UN) pour négocier est configuré pour mettre en oeuvre une négociation entre le noeud d'accès (NA) et le noeud de contrôle (NC1).

11. Noeud d'accès (NA) conforme à la revendication 10, dans lequel le moyen (UN) pour négocier est configuré pour émettre une demande négociation au noeud d'usager (NU), en vue d'une négociation entre le noeud d'usager (NU) et le noeud (NC1) de contrôle.

12. Noeud d'accès (NA) conforme à la revendication 9, comprenant un moyen (UN) pour sélectionner un canal radio de données (CRD) préétabli par le noeud d'accès (NA) pour une communication précédente entre le noeud d'usager (NU) et un noeud (NC1, NEₙ) de l'un des premier et deuxième réseaux de transmission (RT1, RT2), et un moyen (IR_{NA}) pour transmettre un paquet de couche réseau relatif à un service offert par un noeud d'équipement (NEₙ) du deuxième réseau de transmission, depuis le noeud d'accès vers le noeud d'usager à travers le canal radio de données sélectionné.

13. Programme d'ordinateur apte à être mis en oeuvre dans un noeud d'accès (NA) pour gérer un paquet de couche réseau (PRS, PRD) communiquant avec un premier réseau de transmission (RT1) et par un canal radio de données (CRD) avec un noeud d'usager (NU), ledit programme étant **caractérisé en ce qu'**il comprend des instructions qui, lorsque le programme est exécuté dans ledit noeud d'accès, réalisent :
une inspection (E2-S2, E7-S7) d'au moins une partie (ADS, ADD, IDP, IDS) du paquet de couche réseau, et
un aiguillage (E3-S3, E8-S9) du paquet de couche réseau inspecté vers un noeud (NC1, NEₙ) de l'un des premier et deuxième réseaux de transmission (RT1, RT2) ou vers le noeud d'usager, et
entre l'inspection (S7) et l'aiguillage (S9) d'un paquet de couche réseau relatif à un service offert par un noeud d'équipement (NEₙ) du deuxième réseau de transmission, une initiation par le noeud d'accès d'une négociation (S8) avec un noeud (NC1) du premier réseau de transmission (RT1) pour établir un canal radio de données (CRD) entre le noeud usager (NU) et le noeud d'accès (NA), et une transmission du paquet de couche réseau relatif au service offert depuis le noeud d'accès (NA) vers le noeud d'usager à travers le canal radio de données (CRD) établi.

14. Support d'enregistrement lisible par un noeud d'accès (NA) pour gérer un paquet de couche réseau (PRS, PRD), apte à communiquer avec un premier réseau de transmission (RT1) et par un canal radio de données (CRD) avec un noeud d'usager (NU), ledit support d'enregistrement étant **caractérisé en ce qu'**il a enregistré un programme d'ordinateur comportant des instructions pour l'exécution d'une inspection (E2-S2, E7-S7) d'au moins une partie (ADS, ADD, IDP, IDS) du paquet de couche réseau, d'un aiguillage (E3-S3, E8-S9) du paquet de couche réseau inspecté vers un noeud (NC1, NEₙ) de l'un des premier et deuxième réseaux de transmission (RT1, RT2) ou vers le noeud d'usager, et entre l'inspection (S7) et l'aiguillage (S9) d'un paquet de couche réseau relatif à un service offert par un noeud d'équipement (NEₙ) du deuxième réseau de transmission, d'une initiation par le noeud d'accès d'une négociation (S8) avec un noeud de contrôle (NC1) du premier réseau de transmission (RT1) pour établir un canal radio de données (CRD) entre le noeud usager (NU) et le noeud d'accès (NA), et une transmission du paquet de couche réseau relatif au service offert depuis le noeud d'accès (NA) vers le noeud d'usager à travers le canal radio de données (CRD) établi.

## Patentansprüche

1. Verfahren zum Managen eines Netzschichtpakets (PRS, PRD) in einem Zugriffsknoten (NA), der mit einem ersten Übertragungsnetz (RT1) kommuniziert und über einen Datenfunkkanal (CRD) mit einem Anwenderknoten (NU) kommuniziert, das ein Untersuchen (E2-S2, E7-S7) wenigstens eines Teils (ADS, ADD, IDP, IDS) des Netzschichtpakets (PRS, PRD) umfasst, **dadurch gekennzeichnet ist, dass** der Zugriffsknoten mit einem zweiten Übertragungsnetz (RT2) verbunden ist, wobei das Verfahren außerdem Folgendes umfasst:
Leiten (E3-S3, E8-S9) des untersuchten Netzschichtpakets zu einem Knoten (NC1, NEₙ) des ersten oder des zweiten Übertragungsnetzes (RT1, RT2) oder zu dem Anwenderknoten und
zwischen dem Untersuchen (S7) und dem Leiten (S9) eines Netzschichtpakets, das auf einen von einem Anlagenknoten (NEₙ) des zweiten Übertragungsnetzes angebotenen Dienst bezogen ist, Beginnen durch den Zugriffsknoten einer Verhandlung (S8) mit einem Steuerknoten (NC1) des ersten Übertragungsnetzes (RT1), um einen Datenfunkkanal (CRD) zwischen dem Anwenderknoten (NU) und dem Zugriffsknoten (NA) aufzubauen, und Übertragen des Netzschichtpakets, das auf den angebotenen Dienst bezogen ist, von dem Zugriffsknoten (NA) zu dem Anwenderknoten über den aufgebauten Datenfunkkanal (CRD).

2. Verfahren nach Anspruch 1, das vor dem Untersuchen des Netzschichtpakets (PRS, PRD) ein Detektieren (D1) einer Verbindung des zweiten Übertragungsnetzes (RT2) und ein Übertragen (D4) von Informationen (IFRT2), die auf das zweite Übertragungsnetz bezogen sind, zu dem Anwenderknoten (NU) umfasst.

3. Verfahren nach Anspruch 2, wobei die Informationen (IFRT2), die auf das zweite Übertragungsnetz (RT2) bezogen sind, von dem Zugriffsknoten (NA) zu dem Anwenderknoten (NU) über einen lokalen Funkkanal (CRL) übertragen werden, der dem ersten Übertragungsnetz (RT1) unbekannt ist und der durch den Zugriffsknoten (NA) aufgebaut wird.

4. Verfahren nach Anspruch 2, wobei die Informationen (IFRT2), die auf das zweite Übertragungsnetz (RT2) bezogen sind, von dem Zugriffsknoten (NA) zu dem Anwenderknoten (NU) über einen herkömmlichen Signalgebungsfunkkanal (CRS) übertragen werden, der dem ersten Übertragungsnetz (RT1) bekannt ist und durch den Zugriffsknoten (NA) aufgebaut wird.

5. Verfahren nach einem der Ansprüche 1 bis 4, wobei das Verhandeln zwischen dem Zugriffsknoten (NA) und dem Steuerknoten (NC1) ausgeführt wird.

6. Verfahren nach einem der Ansprüche 1 bis 4, wobei das Verhandeln das Schicken einer Verhandlungsanforderung zur Beachtung durch den Anwenderknoten (NU) umfasst, wobei das Verhandeln zwischen dem Anwenderknoten (NU) und dem Steuerknoten (NC1) erfolgt.

7. Verfahren nach einem der Ansprüche 1 bis 3, wobei das Verhandeln von wenigstens einem Qualitätskriterium abhängt, das auf den von dem Anlagenknoten (NEₙ) angebotenen Dienst bezogen ist und das der aufzubauende Datenfunkkanal (CRD) erfüllen muss.

8. Verfahren nach einem der Ansprüche 1 bis 3, das zwischen dem Untersuchen (S7) und dem Leiten (S9) eines Netzschichtpakets, das auf einen von einem Anlagenknoten (NEₙ) des zweiten Übertragungsnetzes angebotenen Dienst bezogenen ist, ein Auswählen eines Datenfunkkanals (CRD), der im Voraus durch den Zugriffsknoten (NA) für eine vorhergehende Kommunikation zwischen dem Anwenderknoten (NU) und einem Knoten (NC1, NEₙ) des ersten oder des zweiten Übertragungsnetzes (RT1, RT2) aufgebaut worden ist, und ein Senden des Netzschichtpakets, das auf den angebotenen Dienst bezogen ist, von dem Zugriffsknoten zu dem Anwenderknoten über den ausgewählten Datenfunkkanal umfasst.

9. Zugriffsknoten (NA), um ein Netzschichtpaket (PRS, PRD) zu managen, der mit einem ersten Übertragungsnetz (RT1) und über einen Datenfunkkanal (CRD) mit einem Anwenderknoten (NU) kommunizieren kann, und ein Mittel (UI) zum Untersuchen wenigstens eines Teils des Netzschichtpakets umfasst, **dadurch gekennzeichnet, dass** er Folgendes umfasst:
ein Mittel (UA/UR), um das untersuchte Netzschichtpaket zu einem Knoten (NC1, NEₙ) des ersten oder des zweiten Übertragungsnetzes (RT1, RT2) oder zu dem Anwenderknoten zu leiten,
ein Mittel (UN), um mit einem Steuerknoten (NC1) des ersten Übertragungsnetzes über das Aufbauen des Datenfunkkanals zu dem Anwenderknoten (NU) zu verhandeln, und
ein Mittel (IR_{NA}), um ein Netzschichtpaket, das auf einem von einem Anlagenknoten (NEₙ) des zweiten Übertragungsnetzes angebotenen Dienst bezogen ist, von dem Zugriffsknoten zu dem Anwenderknoten über den aufgebauten Datenfunkkanal zu übertragen.

10. Zugriffsknoten (NA) nach Anspruch 9, wobei das Mittel (UN) zum Verhandeln konfiguriert ist, eine Verhandlung zwischen dem Zugriffsknoten (NA) und dem Steuerknoten (NC1) auszuführen.

11. Zugriffsknoten (NA) nach Anspruch 10, wobei das Mittel (UN) zum Verhandeln konfiguriert ist, eine Verhandlungsanforderung zu dem Anwenderknoten (NU) im Hinblick auf eine Verhandlung zwischen dem Anwenderknoten (NU) und dem Steuerknoten (NC1) auszusenden.

12. Zugriffsknoten (NA) nach Anspruch 9, der ein Mittel (UN), um einen Datenfunkkanal (CRD) auszuwählen, der vorher von dem Zugriffsknoten (NA) für eine vorhergehende Kommunikation zwischen dem Anwenderknoten (NU) und einem Knoten (NC1, NEₙ) des ersten oder des zweiten Übertragungsnetzes (RT1, RT2) aufgebaut worden ist, und ein Mittel (IR_{NA}), um ein Netzschichtpaket, das auf einen von einem Anlagenknoten (NEₙ) des zweiten Übertragungsnetzes angebotenen Dienst bezogen ist, von dem Zugriffsknoten zu dem Anwenderknoten über den ausgewählten Datenfunkkanal zu übertragen, umfasst.

13. Computerprogramm, das in einem Zugriffsknoten (NA) zum Managen eines Netzschichtpakets (PRS, PRD) ausgeführt werden kann, der mit einem ersten Übertragungsnetz (RT1) und über einen Datenfunkkanal (CRD) mit einem Anwenderknoten (NU) kommuniziert, wobei das Programm **dadurch gekennzeichnet ist, dass** es Befehle umfasst, die dann, wenn das Programm in dem Zugriffsknoten ausgeführt wird, Folgendes verwirklichen:
Untersuchen (E2-S2, E7-S7) wenigstens eines Teils (ADS, ADD, IDP, IDS) des Netzschichtpakets und
Leiten (E3-S3, E8-S9) des untersuchten Netzschichtpakets zu einem Knoten (NC1, NEₙ) des ersten oder des zweiten Übertragungsnetzes (RT1, RT2) oder zu dem Anwenderknoten und
zwischen dem Untersuchen (S7) und dem Leiten (S9) eines Netzschichtpakets, das auf einen von einem Anlagenknoten (NEₙ) des zweiten Übertragungsnetzes angebotenen Dienst bezogen ist, Beginnen durch den Zugriffsknoten einer Verhandlung (S8) mit einem Knoten (NC1) des ersten Übertragungsnetzes (RT1), um einen Datenfunkkanal (CRD) zwischen dem Anwenderknoten (NU) und dem Zugriffsknoten (NA) aufzubauen, und Übertragen des Netzschichtpakets, das auf den angebotenen Dienst bezogen ist, von dem Zugriffsknoten (NA) zu dem Anwenderknoten über den aufgebauten Datenfunkkanal (CRD).

14. Aufzeichnungsträger, der durch einen Zugriffsknoten (NA) zum Managen eines Netzschichtpakets (PRS, PRD) gelesen werden kann und der mit einem ersten Übertragungsnetz (RT1) und über einen Datenfunkkanal (CRD) mit einem Anwenderknoten (NU) kommunizieren kann, wobei der Aufzeichnungsträger **dadurch gekennzeichnet ist, dass** auf ihm ein Computerprogramm aufgezeichnet ist, das Befehle enthält, um Folgendes auszuführen: Untersuchen (E2-S2, E7-S7) wenigstens eines Teils (ADS, ADD, IDP, IDS) des Netzschichtpakets, Leiten (E3-S3, E8-S9) des untersuchten Netzschichtpakets zu einem Knoten (NC1, NEₙ) des ersten oder des zweiten Übertragungsnetzes (RT1, RT2) oder zu dem Anwenderknoten und zwischen dem Untersuchen (S7) und dem Leiten (S9) eines Netzschichtpakets, das auf einen von einem Anlagenknoten (NEₙ) des zweiten Übertragungsnetzes angebotenen Dienst bezogen ist, Beginnen durch den Zugriffsknoten einer Verhandlung (S8) mit einem Steuerknoten (NC1) des ersten Übertragungsnetzes (RT1), um einen Datenfunkkanal (CRD) zwischen dem Anwenderknoten (NU) und dem Zugriffsknoten (NA) aufzubauen, und Übertragen des Netzschichtpakets, das auf den angebotenen Dienst bezogen ist, von dem Zugriffsknoten (NA) zu dem Anwenderknoten über den aufgebauten Datenfunkkanal (CRD).

## Claims

1. Method for managing a network layer packet (PRS, PRD) in an access node (NA) communicating with a first transmission network (RT1) and communicating, by a data radio channel (CRD) with a user node (NU), comprising an inspection (E2-S2, E7-S7) of at least a part (ADS, ADD, IDP, IDS) of the network layer packet (PRS, PRD) and being **characterized in that**, the access node being connected to a second transmission network (RT2), the method further comprises:
a switching (E3-S3, E8-S9) of the inspected network layer packet to a node (NC1, NEₙ) of one of the first and second transmission networks (RT1, RT2) or to the user node, and
between the inspection (S7) and the switching (S9) of a network layer packet relating to a service offered by an equipment node (NEₙ) of the second transmission network, an initiation by the access node of a negotiation (S8) with a control node (NC1) of the first transmission network (RT1) to establish a data radio channel (CRD) between the user node (NU) and the access node (NA), and a transmission of the network layer packet relating to the service offered from the access node (NA) to the user node through the established data radio channel (CRD).

2. Method according to Claim 1, comprising, prior to the inspection of the network layer packet (PRS, PRD), a detection (D1) of a connection of the second transmission network (RT2) and a transmission (D4) of information (IFRT2) relating to the second transmission network to the user node (NU).

3. Method according to Claim 2, according to which the information (IFRT2) relating to the second transmission network (RT2) is transmitted from the access node (NA) to the user node (NU) through a local radio channel (CRL) unknown to the first transmission network (RT1) and established by the access node (NA).

4. Method according to Claim 2, according to which the information (IFRT2) relating to the second transmission network (RT2) is transmitted from the access node (NA) to the user node (NU) through a conventional signalling radio channel (CRS) known to the first transmission network (RT1) and established by the access node (NA).

5. Method according to any one of Claims 1 to 4, in which the negotiation is performed between the access node (NA) and the control node (NC1).

6. Method according to any one of Claims 1 to 4, in which the negotiation comprises the sending of a negotiation request for the attention of the user node (NU), the negotiation being between the user node (NU) and the control node (NC1).

7. Method according to any one of Claims 1 to 3, according to which the negotiation depends on at least one quality criterion relating to the service offered by the equipment node (NEₙ) that the data radio channel (CRD) to be established must satisfy.

8. Method according to any one of Claims 1 to 3, comprising, between the inspection (S7) and the switching (S9) of a network layer packet relating to a service offered by an equipment node (NEₙ) of the second transmission network, a selection of a data radio channel (CRD) pre-established by the access node (NA) for a previous communication between the user node (NU) and a node (NC1, NEₙ) of one of the first and second transmission networks (RT1, RT2), and a transmission of the network layer packet relating to the service offered from the access node to the user node through the selected data radio channel.

9. Access node (NA) for managing a network layer packet (PRS, PRD), suitable for communicating with a first transmission network (RT1) and by a data radio channel (CRD) with a user node (NU), comprising a means (UI) for inspecting at least a part of the network layer packet and **characterized in that** it comprises:
a means (UA/UR) for switching the inspected network layer packet to a node (NC1, NEₙ) of one of the first and second transmission networks (RT1, RT2) or to the user node,
a means (UN) for negotiating, with a control node (NC1) of the first transmission network (NC1), the establishment of the data radio channel with the user node (NU), and
a means (IR_{NA}) for transmitting a network layer packet relating to a service offered by an equipment node (NEₙ) of the second transmission network, from the access node to the user node through the established data radio channel.

10. Access node (NA) according to Claim 9, in which the means (UN) for negotiating is configured to implement a negotiation between the access node (NA) and the control node (NC1).

11. Access node (NA) according to Claim 10, in which the means (UN) for negotiating is configured to send a negotiation request to the user node (NU), with a view to a negotiation between the user node (NU) and the control node (NC1).

12. Access node (NA) according to Claim 9, comprising a means (UN) for selecting a data radio channel (CRD) pre-established by the access node (NA) for a previous communication between the user node (NU) and a node (NC1, NEₙ) of one of the first and second transmission networks (RT1, RT2), and a means (IR_{NA}) for transmitting a network layer packet relating to a service offered by an equipment node (NEₙ) of the second transmission network, from the access node to the user node through the selected data radio channel.

13. Computer program suitable for implementation in an access node (NA) for managing a network layer packet (PRS, PRD) communicating with a first transmission network (RT1) and by a data radio channel (CRD) with a user node (NU), said program being **characterized in that** it comprises instructions which, when the program is run in said access node, perform:
an inspection (E2-S2, E7-S7) of at least a part (ADS, ADD, IDP, IDS) of the network layer packet, and
a switching (E3-S3, E8-S9) of the inspected network layer packet to a node (NC1, NEₙ) of one of the first and second transmission networks (RT1, RT2) or to the user node, and
between the inspection (S7) and the switching (S9) of a network layer packet relating to a service offered by an equipment node (NEₙ) of the second transmission network, an initiation by the access node of a negotiation (S8) with a node (NC1) of the first transmission network (RT1) to establish a data radio channel (CRD) between the user node (NU) and the access node (NA), and a transmission of the network layer packet relating to the service offered from the access node (NA) to the user node through the established data radio channel (CRD).

14. Storage medium that can be read by an access node (NA) for managing a network layer packet (PRS, PRD), suitable for communicating with a first transmission network (RT1) and by a data radio channel (CRD) with a user node (NU), said storage medium being **characterized in that** it has stored a computer program comprising instructions for the execution of an inspection (E2-S2, E7-S7) of at least a part (ADS, ADD, IDP, IDS) of the network layer packet, a switching (E3-S3, E8-S9) of the inspected network layer packet to a node (NC1, NEₙ) of one of the first and second transmission networks (RT1, RT2) or to the user node, and, between the inspection (S7) and the switching (S9) of a network layer packet relating to a service offered by an equipment node (NEₙ) of the second transmission network, an initiation by the access node of a negotiation (S8) with a control node (NC1) of the first transmission network (RT1) to establish a data radio channel (CRD) between the user node (NU) and the access node (NA), and a transmission of the network layer packet relating to the service offered from the access node (NA) to the user node through the established data radio channel (CRD).
